# EUROPÄISCHE PATENTSCHRIFT

(11) **EP 0 589 005 B1**
(45) Veröffentlichungstag und Bekanntmachung des Hinweises auf die Patenterteilung: **11.06.1997**
(21) Anmeldenummer: 93906501.7
(22) Anmeldetag: 11.03.1993
(51) Int. Cl.: G05B 19/418, H02J 13/00

(54) **FREIPROGRAMMIERBARES INSTALLATIONSNETZWERK**
FREELY PROGRAMMABLE INSTALLATION NETWORK
RESEAU D'INSTALLATION LIBREMENT PROGRAMMABLE

(30) Priorität: 11.03.1992 DE 4207784
(43) Veröffentlichungstag der Anmeldung: 30.03.1994
(73) Patentinhaber: NIMBACH, Martin, D-86956 Schongau (DE); Mühl, Christian Dipl.-Ing., D-8022 Grünwald (DE)
(72) Erfinder: NIMBACH, Martin, D-86956 Schongau (DE); Mühl, Christian Dipl.-Ing., D-8022 Grünwald (DE)
(74) Vertreter: Vogeser, Werner, Dipl.-Ing.
(86) Internationale Anmeldenummer: EP9300558
(87) Internationale Veröffentlichungsnummer: WO9318443

(56) Entgegenhaltungen:
- EP-A- 0 062 870
- EP-A- 0 299 311
- EP-A- 0 359 178
- EP-A- 0 433 527
- US-A- 4 667 193

## Beschreibung

Die Erfindung betrifft ein Installationsnetzwerk entsprechend dem Oberbegriff des Anspruchs 1.

Ein derartiges Netzwerk ist aus der DE-Z: Siemens-Zeitschrift 5/90, S. 16-20, Aufsatz v. Seip: Von der Leittechnik zum Gebäude-Management-System und DE-Z: etz Bd. 112 (1991) H. 23, S. 1286-1291, Aufsatz v. Friedl: Gebäudesystemtechnik - die neue Dimension der Elektroinstallation bekannt. Bei diesen Netzwerken erfolgt die Programmierung der Verbraucher dezentral am Verbraucher selbst. Dies hat zur Folge, daß jeder Verbraucher einen Speicher und einen Steueranschluß zur Programmierung mittels eines Programmiergerätes vor Ort oder eine Programmiereinrichtung mittels mechanischer Schalter erfordert.

Die DE-Z: Elektrowärme International 47 (1989) A5, September, S. A 180 - A 184, Aufsatz v. Neumann: Automatisierungsgeräte in der technischen Gebäudeausrüstung erläutert die Entwicklung auf dem Gebiet der Automatisierung in der technischen Gebäudeausrüstung; neben dem parallelen Konzept mit modularen Einzelreglern und der dezentralen Automatisierung wird auch die zentrale Leittechnik mit geringer Vor-Ort-Automatisierung erwähnt.

Aus der DE 35 06 469 ist es bekannt, zur prioritätsabhängigen Steuerung des Zugriffs auf eine gemeinsame Busleitung, an die mehrere Teilnehmer parallel angeschlossen sind, zwischen den Teilnehmern Telegramme mit Absender und Adressat zu übermitteln, um eine bestimmte höchste Priorität festzulegen.

Aus der DE 39 19 070 ist es bekannt, bei einer Steckdose einen zusätzlichen Installationsraum für eine zum Beispiels als Prozessor ausgebildete Schnittstelle vorzusehen.

Der Erfindung liegt die Aufgabe zugrunde, den gesamten schaltungstechnischen und bedienungsmäßigen Aufwand zu verringern; insbesondere soll es möglich sein, handelsübliche Elemente wie z. B. Steckdosen und Schalter verwenden zu können.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteran sprüchen.

Dadurch, daß jedem Verbraucher und jedem Sender nur eine einzige Kennziffer zugeordnet ist, die schon herstellerseitig eingegeben werden kann, vereinfacht sich der schaltungstechnische Aufwand erheblich, da Verbraucher und Sender nur zum Empfang bzw. zum Senden dieser Kennziffer ausgebildet sein müssen. Bei den Verbrauchern ist die Phase des Versorgungsnetzes über ein Relais geschaltet, das durch die ankommende Kennziffer betätigt wird und den Verbraucher schaltet. Das Schaltsignal kann z. B. ein Ein-, Aus-, Um-, Zeitschalt- oder ein Dimmersignal sein.

Wenn ein Schalter, z. B. ein Lichtschalter betätigt wird, sendet er seine Kennziffer aus, die im entsprechenden Verteiler empfangen wird. Stellt dieser z. B. fest, daß ein an dieselbe Busleitung angeschlossener Verbraucher geschaltet werden soll, sendet er die entsprechende Kennziffer aus und der Verbraucher wird entsprechend geschaltet, soll aber ein Verbraucher geschaltet werden, der an eine Busleitung angeschlossen ist, die mit einem anderen Verteiler verbunden ist, bleibt der mit dem Sender verbundene Verteiler nur insoweit aktiv, als er das Sendesignal weiterleitet. Dieser Vorgang wiederholt sich bei den nachgeschalteten Verteilern, bis das Sendesignal den Bestimmungsverteiler erreicht, der dann den Verbraucher auf der entsprechenden Busleitung auswählt.

Wie das dezentrale Netzwerk kann auch beim vorgeschlagenen Netzwerk bei einem Ausfall bestimmter Verbraucher z. B. durch Blitzschlag von dem nächsten nachgeordneten, noch intakten Verteiler ein Alarmsignal ausgegeben werden.

Dadurch, daß jedem Verbraucher und jedem Sender nur eine einzige Kennziffer zugeordnet ist, die schon herstellerseitig eingegeben werden kann, vereinfacht sich der schaltungstechnische Aufwand erheblich, da Verbraucher und Sender nur zum Empfang bzw. zum Senden dieser Kennziffer ausgebildet sein müssen, so daß es möglich ist, handelsübliche Steckdosen und Schalter zu verwenden, die durch die zusätzlich erforderlichen schaltungstechnischen Einrichtungen ergänzt werden.

Je nach Anzahl der erforderlichen Verbraucher und Sender ist es möglich, jeden Verteiler mit einer entsprechenden Anzahl von Busleitungen zu verbinden, mehrere Verteiler selbst durch Busleitungen zu verbinden und diese wiederum mit einem zentralen Steuergerät zusammenzuschalten. Dabei können an solch ein Steuergerät mehrere Gruppen von Verteilern angeschlossen sein, so daß sich Steuerung, Regelung und Zuordnung der Verbraucher und Sender teilzentralisiert oder zentralisiert ändern läßt. Auch ist es jederzeit möglich, zusätzlich übergeordnete Schaltprogramme durchzuführen, wie beispielsweise Notlicht- oder Putzlichtfunktionen oder Betriebsstundenzählungen in Verbindung mit Wartungsprogrammen.

Ein Ausführungsbeispiel der Erfindung wird nachstehend anhand eines Blockschaltbildes beispielsweise erläutert.

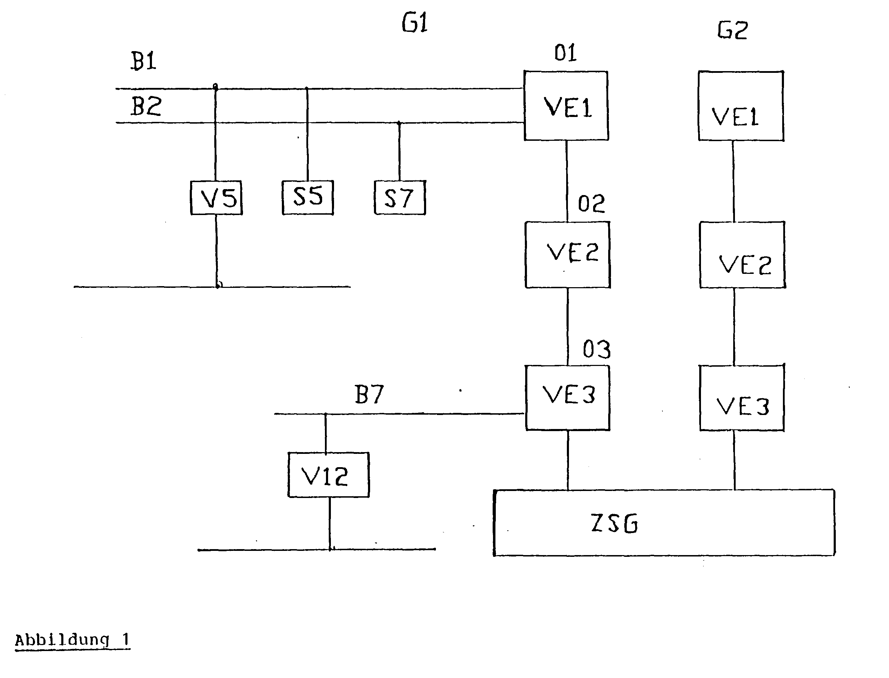

Die Zeichnung zeigt ein freiprogrammierbares Installationsnetzwerk mit drei Verteilern VE1, VE2, VE3, die mit einem zentralen Steuergerät ZSG verbunden sind. An den Verteiler VE1 sind zwei Busleitungen B1 und B2 angeschlossen. An die Busleitung B1 ist ein Verbraucher V5 und ein Sender S5 und an die Busleitung B2 ein Sender S7 angeschlossen. Der Verbraucher V5 ist gleichzeitig an ein Versorgungsnetz angeschlossen, während die Sender S5 und S7 über die Busleitung versorgt werden. Außerdem ist beispielsweise an den Verteiler VE3 eine Busleitung B7 und an diese ein Verbraucher V12 angeschlossen. Die Verteiler VE1 und VE3 bilden zusammen mit den angeschlossenen Busleitungen eine Gruppe, die an ein zentrales Steuergerät angeschlossen ist, an das weitere solche Gruppen wie G2 angeschlossen sein können. Wird z. B. der einen Schalter darstellende Sender S7 betätigt, sendet er die Kennziffer S010207 aus; dabei entsteht 01 für den Verteiler VE1, 02 für die Busleitung B2 und 07 für den Sender S7. Im Verteiler VE1 wird z. B. festgestellt, daß dem Sender S7 der an die Busleitung B1 angeschlossene Verbraucher V5 zugeordnet ist, er sendet daher das Signal V010105 aus, in dem der Reihe nach 01 für den Verteiler VE1, 01 für Busleitung B1 und 05 für den Verbrauch V5 stehen. Soll dagegen mit dem Schalter S7 ein Verbraucher V12 geschaltet werden, der an die Busleitung B7 des Verteilers VE3 angeschlossen ist, sendet der Schalter S7 wiederum das Signal S010207 aus, in den Verteilern VE1 und VE2 wird jedoch festgestellt, daß keine der angeschlossenen Busleitungen betroffen ist, das Signal läuft also zum Verteiler VE3 durch, der dann das Signal V030712 aussendet.

## Patentansprüche

1. Freiprogrammierbares Installationsnetzwerk zur Steuerung, Regelung und Überwachung des Betriebszustandes von an ein Netz anschließbaren elektrischen Verbrauchern (V) und zugehörigen, die Verbraucher schaltenden Sendern (S), sowie zur Festlegung der Zuordnung der Verbraucher und Sender zueinander,
- wobei eine bestimmte Anzahl von Verbrauchern (V) und/oder Sendern (S) parallel an eine Busleitung (B) anschließbar ist,
- die an wenigstens einen programmierbaren Verteiler (VE) angeschlossen ist,
- an den mehrere Busleitungen (B) anschließbar sind,
**gekennzeichnet durch**
die folgenden Merkmale:
a) jedem Verbraucher (V) und/oder Sender (S) ist geräteintern eine einzige Adresse zugeordnet, die sich aus der Kennziffer des Verbrauchers oder Senders, der Kennziffer der angeschlossenen Busleitung (B) und der Kennziffer des Verteilers (VE), an die die Busleitung angeschlossen ist, zusammensetzt, und
b) jeder Verteiler (VE) enthält ein Programm, das eine Zuordnung von Adressen von Sendern (S) zu Adressen von an diesen Verteiler (VE) über wenigstens eine Busleitung (B) angeschlossenen Verbrauchern (V) beinhaltet,
c) empfängt ein Verteiler (VE) ein Adressensignal, so wird in diesem Verteiler festgestellt, ob dieser Adresse eine Adresse eines über die Busleitung (B) an diesen Verteiler (VE) angeschlossenen Verbrauchers (V) zugeordnet ist, und wenn dies der Fall ist, wird der Verbraucher (V) geschaltet, wird jedoch festgestellt, daß keine der angeschlossenen Busleitungen (B) betroffen ist, so läuft das Adressensignal durch den Verteiler (VE) durch, wobei die Schaltung unabhängig vom Zustand eines evtl. diesem Verbraucher (V) zugeordneten weiteren Senders (S) erfolgt.

2. Freiprogrammierbares Installationsnetzwerk nach Anspruch 1,
**dadurch gekennzeichnet**,
daß eine Gruppe (G) von Verteilern (V) durch Busleitungen (B) verbunden ist, der ein zentrales Steuergerät (ZSG) übergeordnet ist.

## Claims

1. Freely programable installation network for controlling, commanding and monitoring the operating condition of electrical users (V) attachable to a power main and associated with users switching transmitters (S) as well as for the determination of the correlation between the users and transmitters,
- wherein a certain number of users (V) and/or transmitters (S) can be connected in parallel to a bus (B),
- which is connected to at least one programable distributor (VE),
- to which a plurality of busses (B) may be connected,
**characterized in**
the following features:
a) with each user (V) and/or transmitter within the equipment unit only one address is associated which is composed of the identification number of the user or transmitter, the identification number of the connected, bus (B) and the identification number of the distributor (VE), to which the bus is connected and
b) each distributor (VE) contains a programm including a correlation of addresses of transmitters (S) to addresses of users (V) connected through at least one bus (B) to said distributor (VE).
c) if a distributor (VE) receives an address signal it is determined in said distributor whether this address is an address of a user (V) connected through the bus (B) to said distributor (VE) and if affirmative, the user (V) is switched, but however if it is determined that none of the connected busses (B) is concerned the address signal runs through the distributor (VE), wherein the switching is effected regardless of the condition of another transmitter as eventually associated with said user (V).

2. Freely programable installation network acc. to claim 1,
**characterized in that**
a group (G) of distributors (V) is connected by busses (B) which is supervised by a central control unit (ZSG).

## Revendications

1. Réseau d'installation librement programmable pour la commande, la régulation et la surveillance de l'état de fonctionnement d'utilisateurs (V) électriques connectés à un réseau et d'émetteurs (S) associés qui assurent la commutation desdits utilisateurs ainsi que pour associer les utilisateurs et les émetteurs,
- un nombre déterminé d'utilisateurs (V) et/ou d'émetteurs (S) pouvant être connectés en parallèle à un bus commune (B),
- qui est connecté à au moins un répartiteur (VE) programmable
- auquel peuvent être connectés plusieurs bus (B),
caractérisé par les caractéristiques suivantes:
a) à chaque utilisateur (V) et/ou émetteur (S) est associée en interne une adresse unique qui se compose du numéro d'identification de l'utilisateur ou de l'émetteur, du numéro d'identification du bus (B) connecté et du numéro d'identification du répartiteur (VE) auquel le bus est connecté et
b) chaque répartiteur (VE) contient un programme qui comporte une mise en relation d'adresses d'émetteurs (S) avec des adresses d'utilisateurs (V) qui sont connectés à ce répartiteur (VE) par l'intermédiaire d'au moins un bus (B),
c) lorsqu'un répartiteur (VE) reçoit un signal d'adresse, on examine dans ce répartiteur si une adresse d'un utilisateur (V) connecté audit répartiteur (VE) par l'intermédiaire du bus (B) est associée à l'adresse reçue, si c'est le cas, l'utilisateur (V) est commuté, si en revanche on constate qu'aucun des bus (B) connectés n'est concerné, le signal d'adresse traverse le répartiteur (VE), la commutation ayant lieu indépendamment de l'état d'un autre émetteur (S) éventuellement associé à cet utilisateur (V).

2. Réseau d'installation librement programmable selon la revendication 1, caractérisé par le fait qu'un groupe de répartiteurs (V) sont reliés par des bus (B), groupe auquel est associé un appareil de commande (ZSG) central supérieur.
